# EUROPEAN PATENT APPLICATION

(11) **EP 3 165 854 A1**
(43) Date of publication of application: **10.05.2017**
(21) Application number: 16155127.0
(22) Date of filing: 10.02.2016
(51) Int. Cl.: F25D 3/10, A23L 3/375, B05B 1/24

(54) **CRYOGEN INJECTION APPARATUS AND CORRESPONDING METHOD**

(30) Priority: 04.11.2015 US 201562250531 P
(71) Applicant: Linde Aktiengesellschaft, 80331 München (DE)
(72) Inventor: NEWMAN, Michael D., Hillsborough, NJ 08844 (US); KILBURN, Thomas Edward, Pennsburg, PA 18073 (US)
(74) Representative: Hofmann, Andreas

(57) **Abstract**

In order to overcome the limitations and problems that earlier apparatus and methods have experienced, a cryogen injection apparatus (10; 100) for injecting a cryogenic substance into a blender or mixer is proposed, said apparatus (10; 100) comprising:
- at least one nozzle (14; 118) constructed for being in fluid communication with an interior of the blender or mixer;
- a heat transfer fluid (22; 114) for being operationally associated by conduction with the at least one nozzle (14; 118); and
- a heat transfer housing (16) supporting the at least one nozzle (14; 118) and having a space therein for receipt of the heat transfer fluid (22; 114) to warm the at least one nozzle (14; 118).

A related method is also provided.

## Description

### Technical field of the present invention

The present invention relates to injection of cryogen into blenders or mixers for cooling, and more particularly to nozzle apparatus that introduce cryogenic substances into products, especially into food products, for chilling and/or freezing same.

### Technological background of the present invention

The bottom injection of cryogen into mixers for cooling food products, for example, is known. Such known bottom injection nozzles for cryogenic substances, such as for example liquid nitrogen (LIN), encounter difficulties when being used with wet products which are drawn into an orifice of the nozzle in communication with the food processing equipment, whereupon the wet food product is frozen upon exposure to the cryogen.

When such a situation occurs, the nozzle orifice will become restricted and eventually clogged. Unfortunately, it is extremely difficult to clear the nozzle, frequently requiring disassembly of same, and no further cooling cryogenic substance can be delivered to the mixer for chilling until the clog is removed.

Existing nozzle structure contributes to this deficiency. That is, known nozzles are made from either thick stainless steel, which transfers a large amount of heat from the mixture or blender wall and thereafter remains cold after an injection cycle of the cryogen until the mixing is complete. This type of stainless steel nozzle contributes to the clogging situation when the cryogenic substance, such as liquid nitrogen (LIN) for example, is exposed to the wet product in the blender or mixer.

Other nozzles are manufactured with a teflon sleeve which reduces the amount of heat transfer from the blender wall to the nozzle, but such nozzles are susceptible to migration of the food product between the sleeve and the housing and will therefore crack the nozzle due to thermal expansion and contraction from the cryogenic substance.

### Disclosure of the present invention: object, solution, advantages

Starting from the disadvantages and shortcomings as described above as well as taking the prior art as discussed into account, an object of the present invention is to overcome the limitations and problems that earlier apparatus and methods have experienced.

This object is accomplished by an apparatus comprising the features of claim 1 as well as by a method comprising the features of claim 10. Advantageous embodiments and expedient improvements of the present invention are disclosed in the respective dependent claims.

The present invention basically provides for a liquid cryogen, in particular liquid nitrogen (LIN), injection nozzle apparatus which is not clogged from use of the cryogenic substance, in particular of the liquid nitrogen (LIN).

There is provided a cryogen injection apparatus for injecting a cryogenic substance into a blender or mixer, which includes at least one nozzle constructed for being in fluid communication with an interior of the blender or mixer; a heat transfer fluid for being operationally associated by conduction with the at least one nozzle; and a heat transfer housing supporting the at least one nozzle and having a space therein for receipt of the heat transfer fluid to warm the at least one nozzle.

According to an advantageous embodiment of the present invention, the heat transfer housing, in particular the heat sink member, may comprise an enclosure having an, in particular spiral, fin at the space for providing an, in particular continuous, flow path for the heat transfer fluid in the space. A higher velocity of the heat transfer fluid through the path provides for an increase in heat transfer between the wall of the mixer or blender and the heat transfer housing.

In an expedient embodiment of the present invention, a block housing or block member may be used to contain and direct the flow of the heat transfer fluid to the heat transfer housing, in particular to the heat sink member, and through the spiral path.

The block housing or block member may favourably comprise a first open end sized and shaped to receive the heat transfer housing, in particular to the heat sink member, therein to restrict the heat transfer fluid to said flow path.

According to a preferred embodiment of the present invention, an outer cover or outer housing may retain the heat transfer housing, in particular the heat sink member, and the flow block housing or flow block member as being releasably mounted together and protects the injection nozzle from external pressure water sprays and cleaning agents. Said outer cover or outer housing may comprise a second open end sized and shaped to receive the flow block housing or flow block member therein to protect said flow block housing and said heat transfer housing.

The heat transfer housing may advantageously comprise an enclosure having a chamber therein, said chamber being expediently in fluid communication with an inlet port and with an outlet port. The at least one nozzle may favourably be disposed through said camber, and/or the heat transfer fluid may preferably be releasably retained in said chamber to warm the at least one nozzle.

The heat transfer housing may advantageously comprise an exterior surface having a shape conforming to an external portion of the blender or mixer for being mounted flush thereto.

There is also provided a method for heat transfer of an injection nozzle providing a cryogenic substance to a blender or mixer, which includes supporting the injection nozzle at a wall of the blender or mixer for being in communication with an interior of said blender or mixer; and providing heat transfer with a fluid to said injection nozzle.

In an expedient embodiment of the present invention, the warming may further comprise defrosting any frozen matter within the injection nozzle.

Further favoured embodiments of the present invention may comprise
- exhausting the fluid away from the injection nozzle, and/or
- expelling any material from the injection nozzle for clearing said injection nozzle, and/or
- retaining the fluid in contact with the injection nozzle for a select amount of time.

According to preferred embodiment of the present invention, the heat transfer fluid may be a substance selected from the group consisting of water, steam, air, hot gas, and at least one combination thereof.

In summary, the present embodiments include a low thermal mass straight bore (or expanding bore) nozzle with an integrated heating system which provides for rapid or quick warming or thawing of the nozzle, and therefore clearing of any product within the nozzle between injection cycles of cryogen, such as liquid nitrogen (LIN), from the nozzle.

The construction of the present nozzle embodiments also eliminates the possibility of cracking of the nozzle because there is no internal sleeve for the nozzle used which could permit thermal expansion and contraction of any frozen product, in particular food product, or condensate between the nozzle body and the thermal sleeve.

### Brief description of the drawings

For a more complete understanding of the present embodiment disclosures and as already discussed above, there are several options to embody as well as to improve the teaching of the present invention in an advantageous manner. To this aim, reference may be made to the claims dependent on claim 1 as well as on claim 10; further improvements, features and advantages of the present invention are explained below in more detail with reference to particular and preferred embodiments by way of nonlimiting example and to the appended drawing figures taken in conjunction with the following description of exemplary embodiments, of which:
- FIG. 1: shows a side view of a cryogen injection nozzle embodiment of the present invention, said embodiment working according to the method of the present invention;
- FIG. 2: shows a perspective view of the cryogen injection nozzle embodiment of FIG. 1;
- FIG. 3: shows a more detailed perspective, exploded view of the cryogen injection nozzle embodiment of FIG. 1 and FIG. 2;
- FIG. 4A: shows a top view of certain elements of the cryogen injection nozzle embodiment of FIG. 3;
- FIG. 4B: shows a side cross-section view of certain elements of the cryogen injection nozzle embodiment of FIG. 3;
- FIG. 5: shows a perspective, partial-transparent view of another embodiment of the injection nozzle of the present invention, said embodiment working according to the method of the present invention; and
- FIG. 6: shows a side view partially in cross-section of the injection nozzle embodiment of FIG. 5.

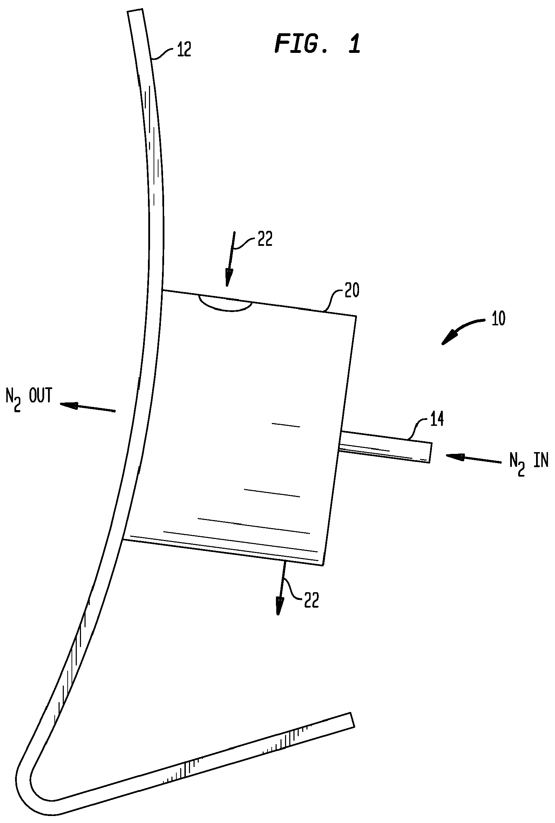

In the appended drawing figures, like equipment is labelled with the same reference numerals throughout the description of FIG. 1 to FIG. 6.

### Detailed description of the drawings; best way of embodying the present invention

Before explaining the inventive embodiments in detail, it is to be understood that the present invention is not limited in its application to the details of construction and arrangement of parts illustrated in the accompanying drawings, since the present invention is capable of other embodiments and being practiced or carried out in various ways. Also, it is to be understood that the phraseology or terminology employed herein is for the purpose of description and not of limitation.

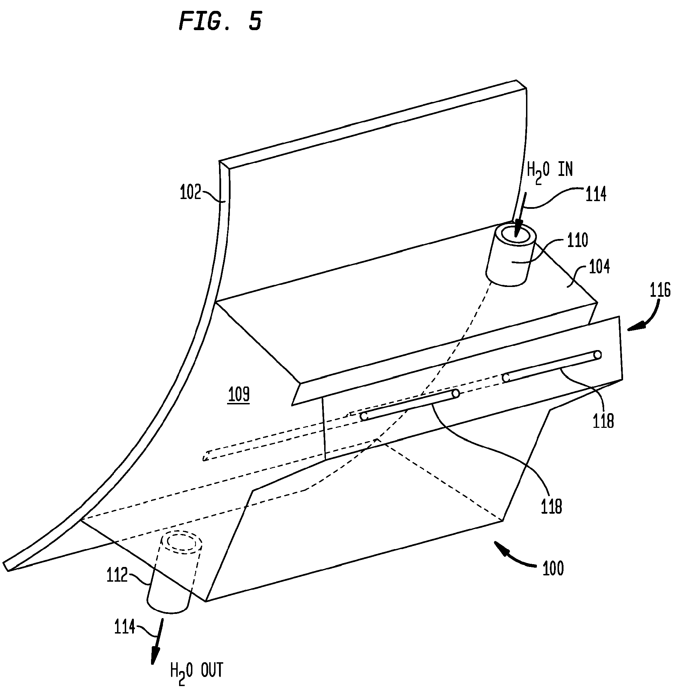

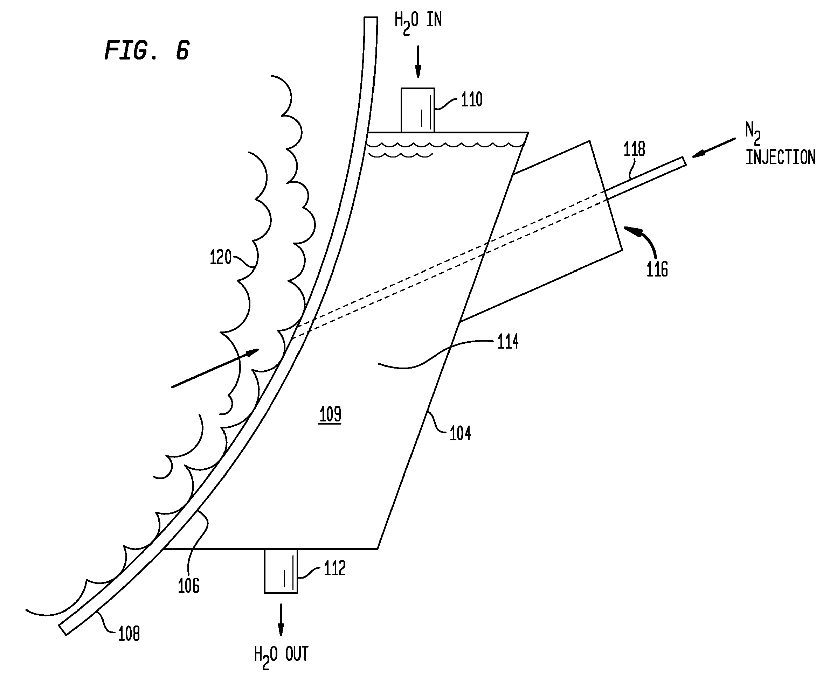

In order to avoid unnecessary repetitions and unless otherwise stated, the above-mentioned as well as the below-mentioned explanations regarding the features, characteristics and advantages of the respective embodiments relate
- to the first apparatus embodiment 10 according to FIG. 1 to FIG. 4B of the present invention as well as
- to the second apparatus embodiment 100 according to FIG. 5 and FIG. 6 of the present invention.

Referring to FIG. 1 to FIG. 3, an injection nozzle apparatus of a first embodiment of the present invention is shown generally at 10 mounted to a wall 12 of a blender or mixer (not shown) in which food product (not shown) is disposed for being chilled. While food product is referred to for being treated by the injection nozzle 10, it is understood that other types of products can be treated with the present injection nozzle embodiment.

The injection nozzle apparatus 10 or apparatus comprises a nozzle or nozzle portion 14, a heat sink member 16, a flow block member 18 and an outer cover or housing 20. A mechanical fastener such as for example a nut 21 removably mounts the heat sink member 16 to the nozzle portion 14 as discussed below. The nozzle portion 14 delivers a cryogen, such as liquid nitrogen (LIN), into the blender.

The nozzle 14 can be either a straight bore stainless steel tube or a machined steel tube with an expanding bore, wherein a diameter of the bore increases along the flow path in the direction of the wall 12. The nozzle 14 is constructed from a material that has a low thermal mass.

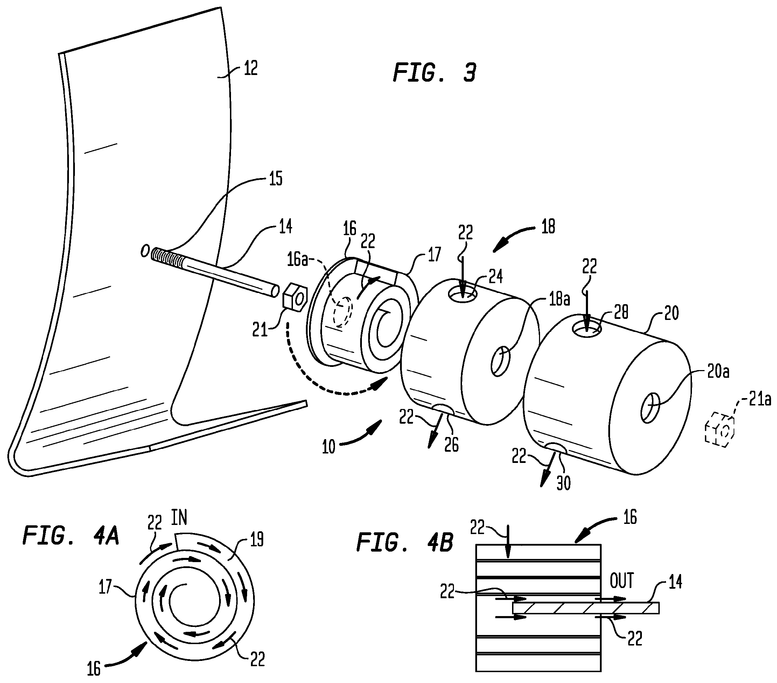

Referring also to FIG. 4A and to FIG. 4B, the heat sink member 16 is used to transfer heat to the blender wall 12 and the nozzle 14. The heat sink member 16 is constructed with a spiral fin 17 for providing a continuous spiral path 19 of the heat sink member 16 as shown for example in FIG. 3 and in FIG. 4A, so that any applied heat transfer fluid 22 must travel through the spiral path 19. A higher velocity of the heat transfer fluid 22 through the spiral path 19 will provide for an increase in heat transfer between the wall 12 and the heat sink member 16.

The heat transfer fluid 22 is discharged from the heat sink member 16 along an axial orientation of the nozzle 14 and then out of the housing 20. Heat is first transferred into the wall 12 and then to the nozzle 14. A thermal mass of the wall 12 is greater than a thermal mass of the nozzle 14. Therefore, any of the heat transfer fluid 22 with a sufficient temperature and thermal conductivity can be used, such as for example water, steam, air, hot gas, etc.

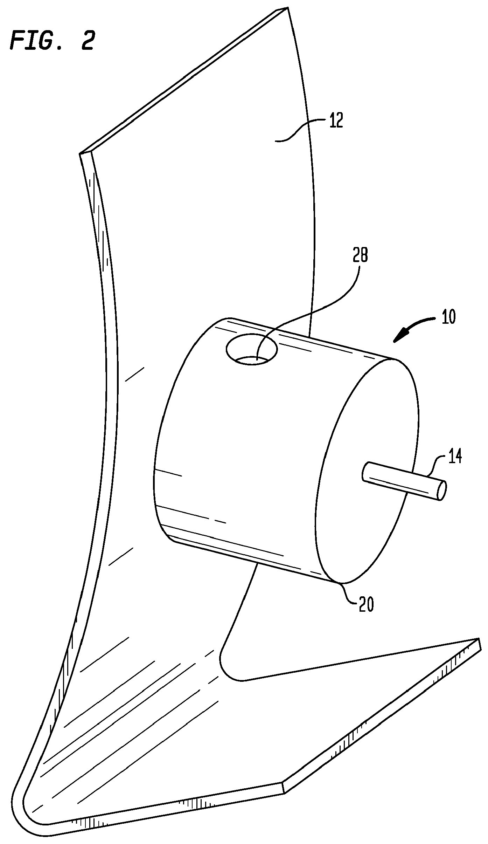

Referring in particular to FIG. 2 and to FIG. 3, the flow block member 18 includes an inlet port 24 and an outlet port 26. The housing 20 also includes a inlet port 28 and outlet port 30. When the injection nozzle 10 of for example FIG. 3 is assembled into what is represented at FIG. 2, the inlet ports 24, 28 can be, although do not have to be, in registration with each other, while the outlet ports 26, 30 can be, although do not have to be, in registration with each other to provide for the flow of the heat transfer fluid 22 into the spiral path 19 for providing heat transfer and to ultimately be exhausted from the outlet port 30.

The flow block member 18 is used to contain and direct the flow of the heat transfer fluid 22 to the heat sink member 16 and through the spiral path 19.

The housing 20 retains the heat sink member 16 and the flow block member 18 as being releasably mounted together and protects the injection nozzle 10 from external pressure water sprays and cleaning agents.

The nozzle portion 14 may be constructed from stainless steel; the heat sink member 16 may be constructed from brass, copper or any other material having high thermal conductivity; the flow block member 18 may be constructed from stainless steel or plastic; and the outer cover or housing 20 may be constructed from stainless steel.

The injection nozzle apparatus 10 of the embodiment shown in FIG. 1 to FIG. 4B permits the nozzle 14 to be easily cleaned, because the only element of the nozzle 14 exposed to an interior of the blender is an interior of the nozzle portion 14. Therefore, hot water or other cleaning solutions can be sprayed through the nozzle portion 14 for easy cleaning without having to disassemble the injection nozzle 10.

Referring to FIG. 1, FIG. 3 and FIG. 4A to FIG. 4B, the flow of the heat transfer fluid 22 is as follows:
The heat transfer fluid 22 is introduced into the inlet port 28 of the outer cover 20 and flows through the inlet port 24 of the flow block 18. The inlet ports 24, 28 may be in registration with each other in order to facilitate the flow of the heat transfer fluid 22.

The heat transfer fluid 22 is thereafter introduced into the spiral path 19 of the heat sink member 16 which is seated within the flow block 18, for the fluid to move along the spiral path 19 where heat transfer occurs for the nozzle 14 and the wall 12 of the blender. Upon completion of the heat transfer fluid 22 travelling along the spiral path 19, the fluid is directed back into the flow block 18 whereupon the fluid exits the block from the outlet port 26 as shown in FIG. 3.

The outlet port of the flow block member 18 may be in registration with the outlet port 30 of the outer cover 20, when the flow block member 18 is seated within the outer cover 20 such that the fluid 22 can be exhausted quickly from the heat sink member 16 and the flow block 18.

The heat sink member 16, the flow block member 18 and the outer cover 20 each have a corresponding central axial hole 16a, 18a, 20a, respectively, as shown for example in FIG. 3 which, when such elements are mounted to the nozzle 14, are in registration with each other so that the injection nozzle apparatus 10 can be mounted to the wall 12 as shown in FIG. 1 to FIG. 2.

The nozzle portion 14 extends through the wall 12 of the blender and has an exterior threaded surface area 15, as shown. The nozzle portion 14 is disposed through the central axial hole 16a of the heat sink member 16 and the mechanical fastener, such as the nut 21, is threaded to the threaded area 15 of the nozzle 14. The flow block member 18 is seated by friction fit or crimping to the heat sink member 16, and the outer cover 20 may be similarly mounted to the flow block 18.

An alternate embodiment can have a mechanical fastener 21a, for example a nut, positioned as shown to threadably engage the nozzle portion 14 where it protrudes through the central axial hole 20a of the outer cover 20. In such an embodiment, the nozzle portion 14 has a threaded surface area at that portion protruding from the outer cover. With this embodiment, the apparatus 10 can be fabricated as a single, integral unit to be mounted to the wall 12 of the blender.

In operation with the actual blender or mixer (not shown), a batch of food product, such as for example ground meat with ingredients therein, is placed in the blender or mixer which is started such that internal blades (not shown) of the blender or mixer mix the food product and ingredients. It is required to chill the meat during the blending operation and therefore, cryogen such as liquid nitrogen (LIN) is injected into the blender or mixer through the injection nozzle 10.

That is, the liquid nitrogen (LIN) is injected through the nozzle portion 14 during which heat is transferred from the wall 12 via conduction with the nozzle portion 14 which also has its temperature reduced to a temperature substantially similar to that of the liquid nitrogen (LIN).

Minimal heat is transferred between the wall 12 and the nozzle 14 due to a low thermal mass of the nozzle portion 14. When a desired, reduced temperature of the meat is obtained, injection of the liquid nitrogen (LIN) 15 is stopped and the meat is removed from the blender or mixer.

The heat transfer fluid 22 is introduced into the inlet port 28 of the outer cover 20 as explained above to rapidly thaw the injection nozzle 14. Any meat or water trapped within the nozzle portion 14 is warmed and can be easily discharged at a start of the next batch of food product being used in the blender.

That is, because the nozzle 14 has been warmed and therefore, thawed by the heat transfer fluid 22 circulating through the spiral path 19 of the heat sink member 16, the next injection of liquid nitrogen (LIN) through the nozzle portion 14 will forceably expel any trapped food product or water, or clog of such, into the blender.

The next batch of meat is thereby loaded into the blender and the process continues. The construction of the injection nozzle apparatus 10 permits clean-in-place (CIP) of the nozzle portion 14 without removal or disassembly of the apparatus.

Referring to FIG. 5 and to FIG. 6, another embodiment of the injection nozzle apparatus is shown generally at 100 mounted to a wall 102 of a blender or mixer (not shown). In this embodiment, water is used to defrost or thaw the apparatus 100 and the wall 102 after an injection cycle of liquid nitrogen (LIN) is introduced to the blender.

The injection nozzle apparatus 100 includes a housing 104 or enclosure which can be manufactured from stainless steel. The housing 104 includes a plurality of sidewalls, one of such sidewall 106 having a surface area substantially conforming to a shape of an exterior surface of the wall 102. The sidewall 106 permits the housing 104 to lie flush against an exterior surface 108 of the wall 102. The sidewalls of the housing 104 define a space 109 or chamber therein.

An inlet port 110 is provided at an upper sidewall of the housing 104, while an outlet port 112 is provided at a lower one of the sidewalls of the housing 104. A heat transfer fluid 114, such as for example water, is introduced into the inlet port 110 and therefore into the space 109, with the space 109 thus being flooded with water, after which the fluid 114 can be removed from the space 109 through the outlet port 112.

The sidewalls of the housing 104 may be arranged to provide an extended portion 116 through which at least one cryogen injection nozzle 118 extends and through the space 109 and the wall 102 for opening into the blender where food product 120 is being chilled. The extended portion 116 provides a larger volume of the space 109 only where the injection nozzle(s) 118 are disposed so that heat transfer is more thorough, uniform, and occurs more quickly.

It is not necessary to have the remainder of the space 109 to be sized similar to that of the extended portion 116. The cryogen may be liquid nitrogen (LIN). In the embodiment shown in FIG. 5 and in FIG. 6, there is a pair of the injection nozzles 118, but it is understood that one or a plurality of the nozzles 118 can be used depending upon the amount of liquid nitrogen (LIN) to be introduced into the blender and the nature or type of the product 120 being processed therein.

During operation, the heat transfer fluid 114, such as water for example, is purged from the space 109 of the housing 104, and a cryogen injection cycle begins having a duration of approximately six to eight minutes, during which occurs liquid nitrogen (LIN) injected through the nozzles 118 to the food product 120 in the blender.

When the injection cycle stops, the heat transfer fluid 114, in this case water, is introduced into the space 109 from the inlet port 110 at a rate of approximately ten to thirty litres per hour for a period of from six to twelve minutes. The water will defrost or thaw the injection nozzle(s) 118 and the surface 108 and wall 102 in close proximity to the sidewall 106. Accordingly, there should be no frozen food product or condensate in the injection nozzle 118.

Any frozen product or moisture in the injection nozzle(s) 118 has been warmed to a temperature sufficient to eject same into the blender at the next LIN injection cycle. The water 114 is then purged from the space 109 of the housing 104 and a subsequent cryogen cycle begins.

The tubing of the injection nozzle 118 or nozzles permits clean-in-place (CIP) of the nozzle 118 without removal of same from the housing 104.

Valving (not shown) operatively associated with the outlet port 112 can be used to retain the heat transfer fluid 114 to a specific depth or amount in the space 109 to carry out the heat transfer effect of the nozzles 118.

It will be understood that the embodiments described herein are merely exemplary, and that one skilled in the art may make variations and modifications without departing from the spirit and scope of the present invention. All such variations and modifications are intended to be included within the scope of the present invention as described and claimed herein. Further, all embodiments disclosed are not necessarily in the alternative, as various embodiments of the present invention may be combined to provide the desired result.

### List of reference numerals

- 10: apparatus, in particular injection nozzle apparatus (= first embodiment; cf. FIG. 1 to FIG. 4B)
- 12: wall of blender or of mixer
- 14: nozzle or nozzle portion, in particular injection nozzle or injection nozzle portion, for example straight bore stainless steel tube or machined steel tube with expanding bore
- 15: threaded area, in particular threaded surface area, for example exterior threaded surface area, of nozzle or nozzle portion 14
- 16: heat transfer housing, in particular heat sink member
- 16a: hole, in particular central axial hole, of heat transfer housing 16
- 17: fin, in particular spiral fin
- 18: block housing or block member, in particular flow block member
- 18a: hole, in particular central axial hole, of block housing or block member 18
- 19: spiral path, in particular continuous spiral path, of heat transfer housing 16
- 20: outer cover or outer housing, in particular nozzle housing
- 20a: hole, in particular central axial hole, of outer cover or outer housing 20
- 21: mechanical fastener, in particular nut, for example retaining nut
- 21a: mechanical fastener, in particular nut, for example retaining nut
- 22: heat transfer fluid, in particular water, steam, air, hot gas, or combination thereof
- 24: inlet port of block housing or block member 18
- 26: outlet port of block housing or block member 18
- 28: inlet port of outer cover or outer housing 20
- 30: outlet port of outer cover or outer housing 20
- 100: apparatus, in particular injection nozzle apparatus (= second embodiment; cf. FIG. 5 and FIG. 6)
- 102: wall of blender or of mixer
- 104: enclosure or housing
- 106: exterior surface or sidewall of enclosure or housing 104
- 108: external portion or exterior surface of wall 102
- 109: chamber or space in enclosure or housing 104
- 110: inlet port of enclosure or housing 104
- 112: outlet port of enclosure or housing 104
- 114: heat transfer fluid, in particular water
- 116: extended portion of enclosure or housing 104
- 118: nozzle, in particular injection nozzle, for example cryogen injection nozzle
- 120: product, in particular food product

## Claims

1. A cryogen injection apparatus (10; 100) for injecting a cryogenic substance into a blender or mixer, comprising:
- at least one nozzle (14; 118) constructed for being in fluid communication with an interior of the blender or mixer;
- a heat transfer fluid (22; 114) for being operationally associated by conduction with the at least one nozzle (14; 118); and
- a heat transfer housing (16) supporting the at least one nozzle (14; 118) and having a space therein for receipt of the heat transfer fluid (22; 114) to warm the at least one nozzle (14; 118).

2. The apparatus (10) according to claim 1, wherein the heat transfer housing (16) comprises an enclosure having a fin (17) at the space for providing a flow path for the heat transfer fluid (22) in the space.

3. The apparatus according to claim 2, wherein the flow path is continuous.

4. The apparatus according to claim 2 or 3, further comprising a block housing (18) having a first open end sized and shaped to receive the heat transfer housing (16) therein to restrict the heat transfer fluid (22) to said flow path.

5. The apparatus according to claim 4, further comprising an outer housing (20) having a second open end sized and shaped to receive the block housing (18) therein to protect said block housing (18) and said heat transfer housing (16).

6. The apparatus (100) according to at least one of claims 1 to 5, wherein the heat transfer housing comprises an enclosure (104) having a chamber (109) therein through which the at least one nozzle (118) is disposed and in which the heat transfer fluid (114) is releasably retained to warm the at least one nozzle (118).

7. The apparatus of claim 6, further comprising
- an inlet port (110) in fluid communication with the chamber (109), and
- an outlet port (112) in fluid communication with the chamber (109).

8. The apparatus according to at least one of claims 1 to 7, wherein the heat transfer housing comprises an exterior surface (106) having a shape conforming to an external portion (108) of the blender or mixer for being mounted flush thereto.

9. The apparatus according to at least one of claims 1 to 8, wherein the heat transfer fluid (22; 114) is a fluid selected from the group consisting of water, steam, air, hot gas, and combinations thereof.

10. A method for heat transfer of an injection nozzle (14; 118) providing a cryogenic substance to a blender or mixer, comprising:
- supporting the injection nozzle (14; 118) at a wall (12; 102) of the blender or mixer for being in communication with an interior of said blender or mixer; and
- providing heat transfer with a fluid (22; 114) to said injection nozzle (14; 118).

11. The method according to claim 10, wherein the warming further comprises defrosting any frozen matter within the injection nozzle (14; 118).

12. The method according to claim 10 or 11, further comprising exhausting the fluid (22; 114) away from the injection nozzle (14; 118).

13. The method according to at least one of claims 10 to 12, further comprising expelling any material from the injection nozzle (14; 118) for clearing said injection nozzle (14; 118).

14. The method according to at least one of claims 10 to 13, further comprising retaining the fluid (22; 114) in contact with the injection nozzle (14; 118) for a select amount of time.

15. The method according to at least one of claims 10 to 14, wherein the fluid (22; 114) is a substance selected from the group consisting of water, steam, air, hot gas, and combinations thereof.
